# EUROPÄISCHE PATENTSCHRIFT

(11) **EP 3 877 220 B1**
(45) Veröffentlichungstag und Bekanntmachung des Hinweises auf die Patenterteilung: **30.11.2022**
(21) Anmeldenummer: 19801235.3
(22) Anmeldetag: 29.10.2019
(51) Int. Cl.: B60R 22/343, B60R 22/415

(54) **SICHERHEITSGURTAUFROLLER**
SEAT BELT RETRACTOR
RÉTRACTEUR DE CEINTURE DE SÉCURITÉ

(30) Priorität: 08.11.2018 DE 102018127909
(43) Veröffentlichungstag der Anmeldung: 15.09.2021
(73) Patentinhaber: Autoliv Development AB, 447 83 Vårgårda (SE)
(72) Erfinder: GLÄSSER, Antto-Christian, 25474 Hasloh (DE); HUEG, Markus, 20259 Hamburg (DE); KÜNZLER, Florian, 22880 Wedel (DE)
(74) Vertreter: Müller Verweyen
(86) Internationale Anmeldenummer: PCT/EP2019/079450
(87) Internationale Veröffentlichungsnummer: WO 2020/094448

(56) Entgegenhaltungen:
- DE-A1- 2 809 395
- DE-C1- 19 602 178

## Beschreibung

Die vorliegende Erfindung betrifft einen Sicherheitsgurtaufroller mit den Merkmalen des Oberbegriffs von Anspruch 1.

Grundsätzlich dienen Sicherheitsgurtaufroller in Fahrzeugen dazu, einen Sicherheitsgurt einer Sicherheitsgurteinrichtung eines Fahrzeuges aufzuwickeln. Dazu weist der Sicherheitsgurtaufroller eine in Aufwickelrichtung federvorgespannte Gurtwelle auf, welche in einem fahrzeugfest befestigten Rahmen drehbar gelagert ist. Außerdem weist der Sicherheitsgurtaufroller eine Blockiereinrichtung zum Blockieren der Gurtwelle in Gurtauszugsrichtung auf, welche mittels geeigneter Sensoreinrichtungen mit jeweils einer auslenkbaren Trägheitsmasse beim Überschreiten vorbestimmter Grenzwerte der Fahrzeugverzögerung oder der Gurtbandauszugsbeschleunigung angesteuert wird. Die Gurtwelle ist demnach unterhalb der Grenzwerte der Fahrzeugverzögerung und der Gurtbandauszugsbeschleunigung gegen die Federvorspannung in Abwickelrichtung drehbar und wird beim Abschnallen des Sicherheitsgurtes selbsttätig durch die Federvorspannung in Aufwickelrichtung angetrieben. Die die Fahrzeugverzögerung detektierende Sensoreinrichtung umfasst eine auslenkbare Trägheitsmasse mit einem daran anliegenden ersten Blockierhebel, welcher bei einer Auslenkung der Trägheitsmasse seinerseits ausgelenkt wird und zur Ansteuerung der Blockiereinrichtung in eine Außenverzahnung einer drehbar an der Gurtwelle gelagerten Steuerscheibe eingreift. In modernen Fahrzeugen bestehen zunehmend die Anforderungen nach einer elektrisch ansteuerbaren Blockiereinrichtung. Dazu ist es z.B. aus den Druckschriften DE 196 20 236 C2, DE28 09 395 A1 und GB 2 398 824 B bekannt, einen elektrischen Aktuator mit einen mittels eines Elektromagneten steuerbaren ersten Blockierhebel vorzusehen, welcher die Blockiereinrichtung in bekannter Weise durch Einsteuern in eine Verzahnung einer Steuerscheibe ansteuert. Die Trägheitsmasse ist in diesem Fall extern z.B. in einer ECU angeordnet und löst durch eine trägheitsbedingte Schwenkbewegung das zur Ansteuerung des Aktuators erforderliche Signal aus.

Bei der aus der DE 196 20 236 C2 bekannten Lösung wird der erste Blockierhebel bei einer Bestromung des Aktuators aktiv zum Eingriff in die Verzahnung der Steuerscheibe ausgelenkt und die Blockierung der Gurtwelle dadurch herbeigeführt. Diese Lösung hat den Nachteil, dass die Gurtwelle bei einem Defekt in der Stromversorgung nicht mehr aktiv blockiert werden kann.

Die aus der GB 2 398 824 B bekannte Lösung aus dem Hause der Anmelderin basiert dagegen auf einem anderen Prinzip. Der erste Blockierhebel ist hier mittels einer Feder in Eingriffsrichtung der Verzahnung der Steuerscheibe federbelastet und wird durch die Bestromung des Aktuators aus der Eingriffsstellung der Verzahnung zurückgezogen. Damit ist die Gurtwelle bei einem nicht bestromten Aktuator und damit auch im Falle eines Ausfalls der Stromversorgung automatisch in Auszugsrichtung des Sicherheitsgurtes blockiert, und der Insasse wird in einem Unfall unabhängig von der Stromversorgung zurückgehalten. Dieses Prinzip weist neben dem Nachteil der dauernden Bestromung des Aktuators zusätzlich den Nachteil auf, dass sich der Insasse vor dem Starten der Stromversorgung nicht anschnallen kann, da die Gurtwelle in diesem Fall durch den in die Steuerscheibe eingreifenden ersten Blockierhebel blockiert ist. Zur Vermeidung dieses Nachteils muss bei dieser Lösung daher zusätzlich ein weiterer Blockierhebel vorgesehen werden, welcher nachfolgend als Extraction Comfort Lever (ECL-Blockierhebel) bezeichnet wird. Der ECL-Blockierhebel blockiert den ersten Blockierhebel des Aktuators während der ersten Auszugsbewegung des Anschnallvorganges und gibt diesen anschließend nach einer kurzen Einzugsbewegung des Sicherheitsgurtes wieder frei. Der ECL-Blockierhebel wurde in einem Gurtaufroller aus dem Hause der Anmelderin als ein Reibungsschlepphebel ausgeführt, welcher mit der Gurtwelle reibschlüssig verbunden ist und dadurch während der ersten Auszugsbewegung des Sicherheitsgurtes in eine den ersten Blockierhebel des Aktuators blockierende Stellung gedrängt wird. Nach dem Verriegeln der Gurtzunge wird der Sicherheitsgurt immer um eine geringfügige Gurtbandlänge eingezogen und damit die Gurtwelle in Aufwickelrichtung gedreht. Diese Bewegung wird dann dazu genutzt, den ECL-Blockierhebel aus der den ersten Blockierhebel blockierenden Stellung in eine den ersten Blockierhebel freigebende Stellung zurückzubewegen. Damit der ECL-Blockierhebel seinerseits anschließend den ersten Blockierhebel des Aktuators nicht ungewollt wieder blockiert, ist eine weitere Blockierfeder vorgesehen, welche mittels einer ersten Schalteinrichtung in eine Stellung bewegt wird, in der diese eine Rückbewegung des ECL-Blockierhebels in die den ersten Blockierhebel blockierende Stellung verhindert.

Ein weiteres Problem bei Sicherheitsgurtaufrollern ist eine sitzintegrierte Anordnung in neigungsverstellbaren Rückenlehnen, bei denen die Blockiereinrichtung des Sicherheitsgurtaufrollers bei einer Neigungsverstellung der Rückenlehne aufgrund der Auslenkung des ersten Blockierhebels ungewollt angesteuert werden würde. Dadurch wäre die Gurtwelle durch die dadurch bedingte Ansteuerung der Blockiereinrichtung in Auszugsrichtung blockiert, und eine weitere Verstellung der Rückenlehne ist aufgrund der blockierten Gurtwelle und des dadurch blockierten Gurtbandauszug nicht mehr möglich. Zur Vermeidung dieses Problems muss die Ansteuerung der Blockiereinrichtung durch die fahrzeugsensitive Sensoreinrichtung in der Stellung des nicht angelegten Sicherheitsgurtes bewusst deaktiviert sein, damit die Neigung der Rückenlehne verstellt werden kann und insbesondere die Rückenlehne zum Einstieg der Insassen auf die hinteren Sitze nach vorne verschwenkt werden kann. Eine solche Abschaltung der fahrzeugsensitiven Sensoreinrichtung wird im Hause der Anmelderin auch als "Lock Canceler" mit der Abkürzung LC bezeichnet. Dazu ist ein LC-Blockierhebel vorgesehen, der in einer ersten Stellung den ersten Blockierhebel des Aktuators bei eingezogenem Gurtband blockiert und mittels einer Schalteinrichtung ab einer vorbestimmten Gurtbandauszugslänge aus der ersten Stellung in eine den Blockierhebel freigebenden zweite Stellung bewegt wird.

Aufgabe der Erfindung ist es, einen Sicherheitsgurtaufroller mit einem elektrisch ansteuerbaren Aktuator mit einem in Eingriffsrichtung einer Steuerscheibe einer Blockiereinrichtung federbelastetem ersten Blockierhebel, einem den ersten Blockierhebel während eines ersten Gurtbandauszuges blockierenden ECL-Blockierhebel und einem den ersten Blockierhebel ab einer vorbestimmten Gurtbandeinzugslänge in der Außereingriffsstellung der Steuerscheibe blockierenden LC-Blockierhebel bereitzustellen, welcher einen vereinfachten konstruktiven Aufbau aufweisen soll.

Zur Lösung der Aufgabe wird ein Sicherheitsgurtaufroller mit den Merkmalen von Anspruch 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass der LC-Blockierhebel und/oder eine Trägerplatte des LC-Blockierhebels eine Blockierkontur aufweisen, welche derart geformt ist, dass der ECL-Blockierhebel daran in einer zweiten, den ersten Blockierhebel freigebenden Stellung zur Anlage gelangt, wenn der LC-Blockierhebel in der zweiten Stellung angeordnet ist.

Der Vorteil der vorgeschlagenen Lösung ist darin zu sehen, dass der LC-Blockierhebel mit der Blockierkontur entsprechend geformt ist und durch die ohnehin vorgenommene Schaltbewegung in eine Position gebracht wird, in der er eine Blockierfläche bildet, an der der ELC-Blockierhebel nach dem Ausziehen und Anlegen des Sicherheitsgurtes und dem geringfügigen Einziehen des Sicherheitsgurtes und der dadurch bedingten Rückdrehung der Gurtwelle blockierend zur Anlage gelangt. Damit kann die bisher vorgesehene Blockierfeder und die dazugehörige Schalteinrichtung zur Blockierung des ECL-Blockierhebel entfallen, und es wird stattdessen der LC-Blockierhebel in seiner Form und mit der durch die ohnehin vorgesehene Schalteinrichtung erzwungenen Schaltbewegung zur Festlegung des ECL-Blockierhebels genutzt. Da der Schaltpunkt des LC-Blockierhebels bei einer sehr kleinen Gurtbandauszugslänge liegt, wird der LC-Blockierhebel bzw. die Trägerplatte mit dem daran angeordneten LC-Blockierhebel und der Blockierkontur bereits nach dem Auszug einer sehr kleinen Gurtbandauszugslänge in die zweite Stellung bewegt, und der ECL-Blockierhebel wird damit auch bei sehr kurzen Gurtbandauszugslängen wie z.B. beim Anschnallen von Kindern anschließend nach der geringfügigen Einzugsbewegung gegen eine wiederholte Blockierung des ersten Blockierhebels blockiert.

Weiter wird vorgeschlagen, dass die Schalteinrichtung in Form eines mit der Gurtwelle gekoppelten Zählgetriebes verwirklicht ist, welches die Bewegung des LC-Blockierhebels in Abhängigkeit von der Gurtbandauszugslänge steuert. Durch das Zählgetriebe kann eine rein mechanische und damit kostengünstige Steuerung des LC-Blockierhebels verwirklicht werden.

Weiter wird vorgeschlagen, dass das Zählgetriebe eine von der Gurtwelle angetriebene Ringverzahnung umfasst, welche exzentrisch zu einer ringförmigen Gegenverzahnung angeordnet ist und sich während der Drehung der Gurtwelle an der Gegenverzahnung umlaufend abwälzt und dadurch die Gegenverzahnung zu einer untersetzten Drehbewegung antreibt. Die vorgeschlagene Form des Zählgetriebes ermöglicht einen kompakten Aufbau des Sicherheitsgurtaufrollers, wobei die Wahl der Untersetzung sehr einfach durch die Bemessung der Zähne der Ringverzahnung und der Gegenverzahnung sowie der Exzentrizität der angetriebene Ringverzahnung vorgenommen werden kann.

Weiter wird vorgeschlagen, dass an der Gegenverzahnung wenigstens ein Schaltnocken vorgesehen ist, welcher die Bewegung des LC-Blockierhebels steuert. Die Gegenverzahnung führt in dem Zählgetriebe eine untersetzte Drehbewegung aus, durch welche der daran angeordnete Schaltnocken eine kreisförmige und ggf. auch wellenförmige Vorschubbewegung ausführt, welche zum Schalten des LC-Blockierhebels genutzt wird.

Alternativ kann das Zählgetriebe auch ein treibendes Antriebszahnrad und wenigstens ein mit dem treibenden Antriebszahnrad kämmendes getriebenes Abtriebszahnrad aufweisen, wobei das getriebene Abtriebszahnrad auf einer schwenkbaren Schaltwippe mit einer Schaltkontur angeordnet ist, und das Antriebszahnrad und/oder das Abtriebszahnrad wenigstens einen Schaltnocken aufweisen, welche(r) in einer vorbestimmten Drehwinkelstellung des Antriebszahnrades und des Abtriebszahnrades eine Schaltbewegung der Schaltwippe erzwingen bzw. erzwingt und dadurch die Bewegung des LC-Blockierhebels steuern bzw. steuert. Die Bewegung der Schaltwippe und damit die Bewegung des LC-Blockierhebels wird durch das gegenseitige Abdrücken der beiden Zahnräder über den oder die Schaltnocken bewirkt, wobei die Schwenkbeweglichkeit der Schaltwippe die Relativbewegung und damit die Schaltbewegung ermöglicht.

Weiter wird vorgeschlagen, dass eine ALR/ELR-Umschaltmechanik vorgesehen ist, welche durch das Zählgetriebe in Abhängigkeit von der Gurtbandauszugslänge gesteuert wird. Durch die vorgeschlagene Lösung wird das bereits vorgesehene Zählgetriebe zusätzlich zur Schaltung einer ALR/ELR-Umschaltmechanik genutzt, welche zur Rückhaltung von Kindersitzen vorgesehen ist. Damit kann der Sicherheitsgurtaufroller mit sehr geringem Aufwand mit einer weiteren Zusatzfunktion versehen werden.

Die Erfindung wird im Folgenden anhand bevorzugter Ausführungsformen unter Bezugnahme auf die beigefügten Figuren erläutert. Dabei zeigen
- Fig. 1: einen erfindungsgemäßen Sicherheitsgurtaufroller gemäß einer ersten Ausführungsform mit einem ECL-Blockierhebel und einem LC-Blockierhebel in verschiedenen Stellungen während der Gurtbandauszugsbewegung, und
- Fig. 2: den erfindungsgemäßen Sicherheitsgurtaufroller aus der Fig. 1 mit dem LC-Blockierhebel in verschiedenen Stellungen und einer ELR/ALR Umschaltmechanik beim Deaktivieren des ALR Modus während der Gurtbandeinzugsbewegung, und
- Fig. 3: einen erfindungsgemäßen Sicherheitsgurtaufroller mit einem LC-Blockierhebel in verschiedenen Stellungen und einer ELR/ALR Umschaltmechanik beim Aktivieren des ALR Modus, und
- Fig. 4: einen erfindungsgemäßen Sicherheitsgurtaufroller gemäß einem zweiten Ausführungsbeispiel in Explosionsdarstellung, und
- Fig. 5: den erfindungsgemäßen Sicherheitsgurtaufroller gemäß dem zweiten Ausführungsbeispiel aus der Figur 4 mit dem ECL-Blockierhebel und dem LC-Blockierhebel in verschiedenen Stellungen, und
- Fig. 6: den ECL-Blockierhebel und die Blockierkontur des LC-Blockierhebels aus der Figur 1 in verschiedenen Stellungen, und
- Fig. 7: den erfindungsgemäßen Sicherheitsgurtaufroller nach den Figuren 1 bis 3 in Explosionsdarstellung, und
- Fig. 8: den LC-Blockierhebel in einer vergrößerten Darstellung in zwei verschiedenen Ansichten, und
- Fig. 9: eine alternative Ausführungsform nach einem zweiten Ausführungsbeispiel während unterschiedlicher Gurtbandauszugslängen, und
- Fig. 10: den Sicherheitsgurtaufroller nach dem zweiten Ausführungsbeispiel in Explosionsdarstellung

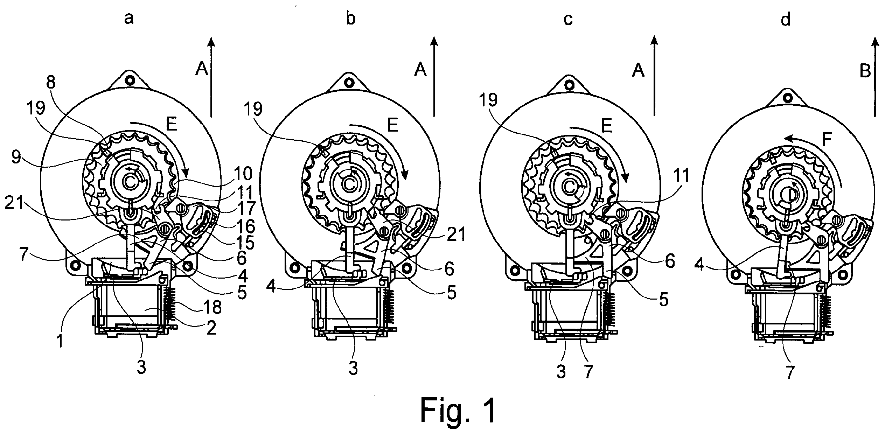

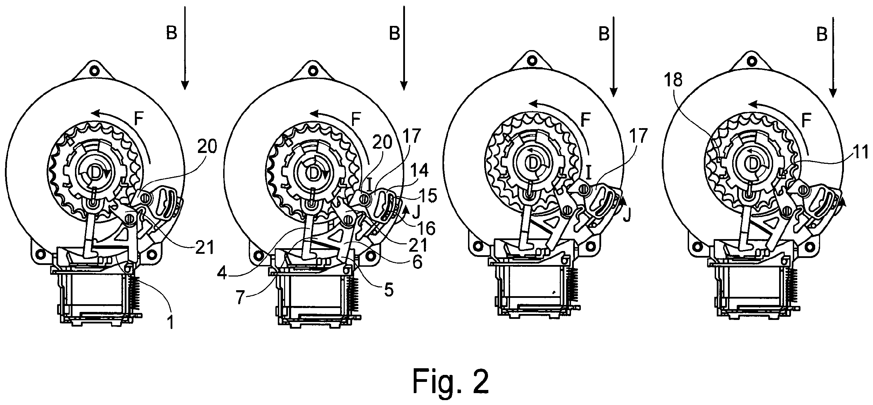

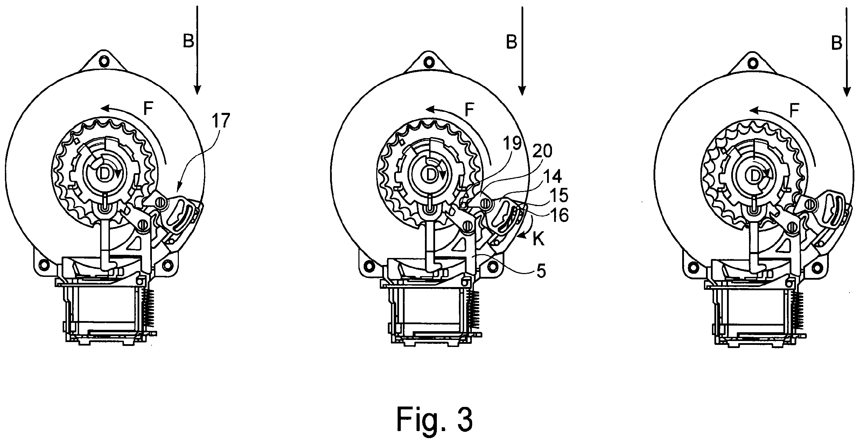

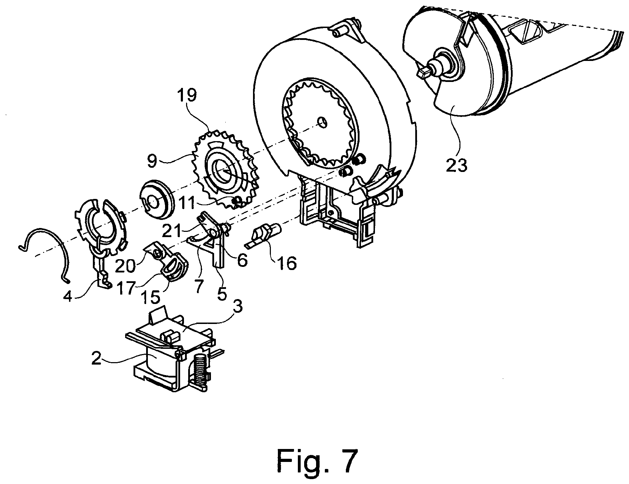

In der Figur 1 ist ein erfindungsgemäßer Sicherheitsgurtaufroller mit einer nur in der Figur 7 zu erkennenden Gurtwelle 23 zu erkennen, welche in einem nicht dargestellten Rahmen drehbar gelagert ist. Neben der Lagerung der Gurtwelle 23 dient der Rahmen in bekannter Weise außerdem zu einer fahrzeugfesten Befestigung des Sicherheitsgurtaufrollers. Auf der Gurtwelle 23 ist ein Sicherheitsgurt aufwickelbar, wobei die Auszugsrichtung in der Figur 1 mit der Pfeilrichtung A und die Einzugsrichtung in den Figuren 2 und 3 mit der Pfeilrichtung B gekennzeichnet ist.

An der Gurtwelle 23 ist eine Steuerscheibe 1 vorgesehen, welche an ihrem äußeren Umfang eine nicht dargestellte, radial nach außen gerichtete Verzahnung aufweist, welche in Aufwickelrichtung des Sicherheitsgurtes gegenüber der Gurtwelle federbelastet ist und durch Ausführen einer Relativdrehbewegung zu der Gurtwelle eine ebenfalls nicht dargestellte Blockiereinrichtung in Form einer an der Gurtwelle gelagerten Blockierklinke zu einer Aussteuerbewegung in eine rahmenfeste Verzahnung zwingt. Ferner ist radial außen an dem Sicherheitsgurtaufroller ein elektrischer Aktuator 2 vorgesehen, welcher einen schwenkbar gelagerten ersten Blockierhebel 3 aufweist, der mittels einer Feder 18 in Eingriffsrichtung der Verzahnung der Steuerscheibe 1 federbelastet ist. Der Aktuator 2 weist weiter einen Elektromagneten auf, welcher den ersten Blockierhebel 3 bei einer Erregung aus der Eingriffsstellung in die Verzahnung herausschwenkt, so dass die Steuerscheibe 1 bei erregtem Elektromagneten frei drehen kann, und die Gurtwelle nicht blockiert ist. Damit wird der erste Blockierhebel 3 bei einem Ausfall der Stromversorgung selbsttätig zum Eingriff in die Verzahnung der Steuerscheibe 1 verschwenkt und die Gurtwelle 23 dadurch zur Rückhaltung des Insassen blockiert. Da der Aktuator 2 vor dem Einschalten der Zündung des Fahrzeuges aufgrund der fehlenden Stromversorgung nicht bestromt ist, wird der erste Blockierhebel 3 durch die Feder 18 in die Verzahnung der Steuerscheibe 2 gezogen und die Gurtwelle 23 wäre folglich in Auszugsrichtung des Sicherheitsgurtes blockiert. Damit dies verhindert wird, ist ein "Extraction Comfort Lever" vorgesehen, welcher nachfolgend als ECL-Blockierhebel 4 bezeichnet wird. Der ECL-Blockierhebel 4 ist durch einen mit der Gurtwelle 23 direkt oder indirekt reibschlüssig verbundenen Reibungsschlepphebel verwirklicht, welcher über eine Ringfeder und einen ringförmigen, offenen Ansatz auf einem der Gurtwelle 23 zugeordneten Absatz reibschlüssig fixiert ist.

Der ECL-Blockierhebel 4 wird durch den Auszug des Sicherheitsgurtes in Pfeilrichtung A und die dadurch bewirkte Drehung der Gurtwelle 23 in Pfeilrichtung C entgegen dem Uhrzeigersinn verschwenkt und gelangt dadurch zur Anlage an der der Steuerscheibe 1 zugewandten Oberseite des ersten Blockierhebels 3. Damit ist der erste Blockierhebel 3 des Aktuators 2 während der ersten Auszugsbewegung trotz der durch die Feder 18 aufgebrachten Federkraft gegen eine Einsteuerbewegung in die Verzahnung der Steuerscheibe 1 blockiert, und der Sicherheitsgurt kann frei ausgezogen werden.

Weiter ist ein LC-Blockierhebel 5 vorgesehen, welcher sich von einer schwenkbar gelagerten Trägerplatte 6 radial nach außen erstreckt. Weiter ist an der Trägerplatte 6 eine Blockierkontur 7 in Form eines radial vorstehenden Fingers und ein Schalthebel 21 mit einer Ausnehmung vorgesehen. An der Gurtwelle ist eine Schalteinrichtung 8 in Form eines Zählgetriebes mit einer Ringverzahnung 9 und einer exzentrisch zu der Ringverzahnung 9 angeordneten Gegenverzahnung 10 vorgesehen. Die Ringverzahnung 9 wälzt sich während der Auszugsbewegung des Sicherheitsgurtes an der Gegenverzahnung 10 ab und führt dabei eine Vorschubbewegung im Uhrzeigersinn in Pfeilrichtung E aus. Auf der Ringverzahnung 9 des Zählgetriebes sind ferner ein erster Schaltnocken 11 und ein zweiter Schaltnocken 19 vorgesehen.

Wie in der linken Darstellung a der Figur 1 zu erkennen ist, befindet sich der LC-Blockierhebel 5 in der Anfangsstellung vor dem beginnenden Gurtbandauszug ebenfalls in einer Stellung, in der er an der der Steuerscheibe 1 zugewandten Oberseite des ersten Blockierhebels 3 anliegt und dadurch den ersten Blockierhebel 3 gegen eine Einsteuerbewegung in die Verzahnung der Steuerscheibe 1 blockiert. Dadurch kann der Sicherheitsgurt z.B. zum Verstellen der Neigung der Rückenlehne aus- und wieder eingezogen werden. Der Aktuator 2 ist praktisch deaktiviert. Die Ringverzahnung 9 greift mit dem ersten Schaltnocken 11 in die Ausnehmung des Schalthebels 21 der Trägerplatte 6 des LC-Blockierhebels 5 ein. Da die Ringverzahnung 9 während der Auszugsbewegung des Sicherheitsgurtes in Pfeilrichtung E dreht, wird die Trägerplatte 6 dabei mit dem LC-Blockierhebel 5 durch den Eingriff des ersten Schaltnockens 11 in die Ausnehmung des Schalthebels 21 zu einer Schwenkbewegung in Pfeilrichtung G entgegen dem Uhrzeigersinn gezwungen. Durch diese Schwenkbewegung der Trägerplatte 6 wird der LC-Blockierhebel 5 von der Oberseite des ersten Blockierhebels 3 weg in die Stellung der Darstellung b verschwenkt, und die Blockierkontur 7 gelangt in eine vorbestimmte Position, welche für die nachfolgend noch näher erläuterte Blockierung des ECL-Blockierhebels 4 wichtig ist.

In der linken Darstellung a der Figur 1 ist der Sicherheitsgurtaufroller in der Stellung zu Beginn der Auszugsbewegung zu erkennen. Der LC-Blockierhebel 5 und der ECL-Blockierhebel 4 liegen an der Oberseite des ersten Blockierhebels 3 an und deaktivieren dadurch den Aktuator 2. Während der nachfolgenden Auszugsbewegung des Sicherheitsgurtes dreht die Gurtwelle in Pfeilrichtung C und drängt dadurch den ECL-Blockierhebel 4 in die den ersten Blockierhebel 3 blockierende Stellung der Darstellung c. Gleichzeitig wird der LC-Blockierhebel 5 in Pfeilrichtung G entgegen dem Uhrzeigersinn in die den ersten Blockierhebel 3 freigebenden Stellung der Darstellung c gedrängt. Nachdem sich der Insasse angeschnallt hat, wird der Sicherheitsgurt immer für einen geringen Betrag wieder in Pfeilrichtung B der rechten Darstellung der Figur 1 eingezogen, wodurch die Gurtwelle 23 in Pfeilrichtung D im Uhrzeigersinn dreht, und der ECL-Blockierhebel 4 gleichzeitig im Uhrzeigersinn verschwenkt wird. Dadurch gibt der ECL-Blockierhebel 4 den ersten Blockierhebel 3 des Aktuators 2 frei, und der Aktuator 2 kann bei einem entsprechenden Signal zur Blockierung der Gurtwelle 23 mit der Spitze des ersten Blockierhebels 3 in die Verzahnung der Steuerscheibe 1 einsteuern. Ferner gelangt der ECL-Blockierhebel 4 dadurch in eine Position, in der er an der Stirnseite der Blockierkontur 7 des LC-Blockierhebels 5 bzw. der diesem zugeordneten Trägerplatte 6 anliegt und dadurch gegen eine Rückdrehbewegung in die den ersten Blockierhebel 3 blockierende Position blockiert ist. Diese Stellung ist in der rechten Darstellung d zu erkennen. Die Blockierung des ECL-Blockierhebels 4 wird damit durch den LC-Blockierhebel 5 mit der an der Trägerplatte 6 angeordneten Blockierkontur 7 bewirkt, wobei die vorangegangene Bewegung des LC-Blockierhebels 5 bewusst genutzt wird, um die Blockierkontur 7 in eine vorbestimmte Position zu bringen, an der der ECL-Blockierhebel 4 anschließend durch die Einzugsbewegung des Sicherheitsgurtes blockierend zur Anlage gelangt. Da der LC-Blockierhebel 5 aufgrund seiner Funktion, den Aktuator 2 bei eingezogenem Sicherheitsgurt zu blockieren, nach einer vorbestimmten Gurtbandauszugslänge ohnehin aus der blockierenden in die den ersten Blockierhebel 3 freigebenden Stellung bewegt wird, kann diese Bewegung durch die erfindungsgemäße Lösung gleichzeitig zur Verwirklichung bzw. zur Bereitstellung der Blockierkontur 7 für den ECL-Blockierhebel 4 nach dem erfolgten Gurtbandauszug in der vorbestimmten Stellung genutzt werden.

In den Darstellungen der Figur 2 ist zusätzlich die Funktionsweise einer an dem Sicherheitsgurtaufroller vorgesehenen ALR/ELR-Umschaltmechanik 17 näher dargestellt. Die ALR/ELR Umschaltmechanik 17 umfasst eine Schaltwippe 14 mit einer Schaltkontur 15, in welche ein ALR-Blockierhebel 16 mit einem vorstehenden Stift eingreift. Der ALR-Blockierhebel 16 befindet sich in der linken Darstellung im Eingriff mit der Verzahnung der Steuerscheibe 1 und führt dadurch zu einer automatischen Blockierung der Gurtwelle 23 in Auszugsrichtung, wenn über den Sicherheitsgurt eine Zugkraft aufgebracht wird. Ferner ist an der Schaltwippe 14 ein Schalthebel 20 vorgesehen, welcher durch die Gurtbandeinzugsbewegung und die dadurch bewirkte Bewegung des Zählgetriebes zur Anlage an dem Schalthebel 21 der Trägerplatte 6 des LC-Blockierhebels 5 gelangt. Während der weiteren Einzugsbewegung führt der Schalthebel 21 der Trägerplatte 6 eine Schwenkbewegung in Pfeilrichtung H aus und erzwingt dadurch eine Schwenkbewegung des Schalthebels 20 der ALR/ELR Umschaltmechanik 17 in Pfeilrichtung I. Durch die dadurch erzwungene Schwenkbewegung der Schaltwippe 14 ebenfalls in Pfeilrichtung I wird der ALR-Blockierhebel 16 durch den in die Schaltkontur 15 eingreifenden Stift zu einer Schwenkbewegung in Pfeilrichtung J aus der Verzahnung der Steuerscheibe 1 heraus gezwungen, und die Steuerscheibe 1 kann sich nachfolgend zusammen mit der Gurtwelle frei in Auszugsrichtung drehen.

In der Figur 3 ist der umgekehrte Bewegungsablauf der ALR/ELR-Umschaltmechanik 17 zu erkennen, bei dem der Schalthebel 20 der Schaltwippe 14 durch ein stirnseitiges Abgleiten des zweiten Schaltnockens 19 der Ringverzahnung 9 zu einer Schwenkbewegung in Pfeilrichtung L gezwungen wird. Gleichzeitig wird der ALR-Blockierhebel 16 dadurch zu einer Schwenkbewegung in Pfeilrichtung K in Eingriffsrichtung in die Verzahnung der Steuerscheibe 1 gezwungen.

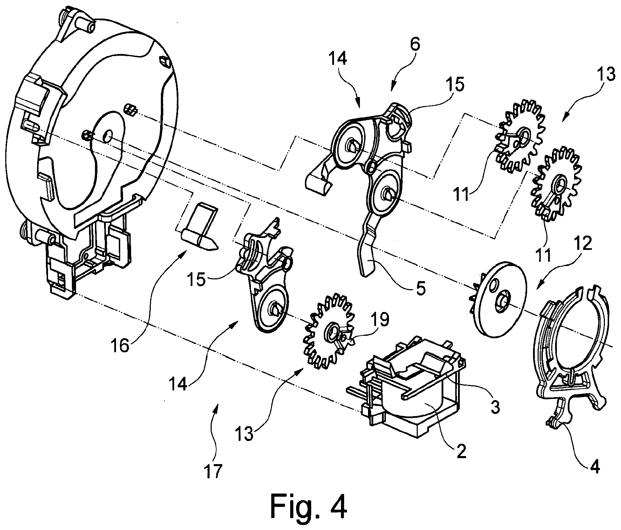

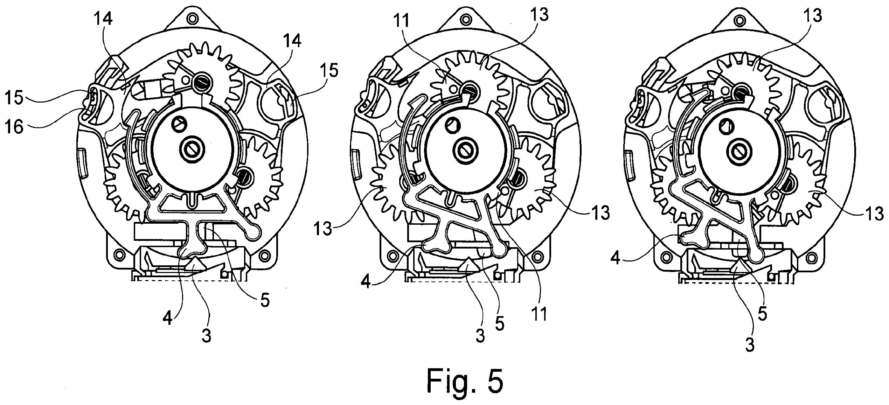

In den Figuren 4 und 5 ist ein erfindungsgemäßer Sicherheitsgurtaufroller mit einer alternativen Ausführungsform des Zählgetriebes zu erkennen. Das Zählgetriebe umfasst ein Antriebszahnrad 12 und drei mit dem Antriebszahnrad 12 kämmende Abtriebszahnräder 13. Die Abtriebszahnräder 13 weisen jeweils einen Schaltnocken 11,19 auf und sind auf zwei verschiedenen Schaltwippen 14 mit jeweils einer Schaltkontur 15 angeordnet. Die Schaltbewegung der Schaltwippen 14 wird in diesem Fall durch das Aufeinandertreffen der Schaltnocken 11 und 19 auf eine Gegenkontur wie z.B. einer Fehlstelle einer Gegenverzahnung ausgelöst.

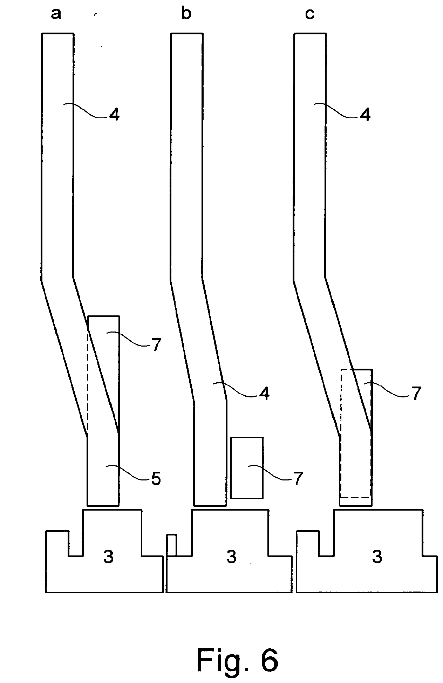

In der Figur 6 ist die Stellung des ECL-Blockierhebels 4 und des LC-Blockierhebels 5 mit der Blockierkontur 7 in Sicht von der Seite in den Stellungen a, c und d in Bezug zueinander und zu dem ersten Blockierhebel 3 des Aktuators 2 zu erkennen. In der linken Darstellung a sind der ECL-Blockierhebel 4 und der LC-Blockierhebel 5 in einer den ersten Blockierhebel blockierenden Stellung, indem sie an der Oberseite des ersten Blockierhebels 3 anliegen und dadurch dessen Ausschwenkbewegung in die Verzahnung der Steuerscheibe 1 verhindern. Während der weiteren Auszugsbewegung des Sicherheitsgurtgurtes wird der LC-Blockierhebel 5 verschwenkt und gelangt dadurch unter einer elastischen seitlichen Verformung des ECL-Blockierhebels 4 in eine Stellung, in welcher er den ECL-Blockierhebel 4 mit der Blockierkontur 7 seitlich überdeckt und in der Darstellung c der Figur 1 hinter dem ECL-Blockierhebel 4 zu liegen kommt. Der LC-Blockierhebel 5 befindet sich damit mit der Blockierkontur 7 in einer Art Bereitschaftsstellung zur Blockierung des ECL-Blockierhebels 4. Wird der Sicherheitsgurt nachfolgend um eine geringe Gurtlänge wieder eingezogen, so dreht der ECL-Blockierhebel 4 und verrastet aufgrund seiner elastischen Verformung selbsttätig an der Stirnseite der Blockierkontur 7 des LC-Blockierhebels 5 in die Stellung der Darstellung d. Dadurch ist der ECL-Blockierhebel 4 anschließend gegen eine Rückdrehbewegung in die den ersten Blockierhebel 3 blockierende Stellung blockiert.

Der ECL-Blockierhebel 4 und der LC-Blockierhebel 5 sind so geformt, dass die Blockierkontur 7 in der den ersten Blockierhebel 3 blockierenden Stellung seitlich des ECL-Blockierhebels 4 liegt, ohne dass dabei einer der Blockierhebel 4 oder 5 elastisch verformt ist. Der ECL-Blockierhebel 4 weist dazu einen leichten Versatz oder auch eine kleine Stufe auf, welche eine überlappende Anordnung ohne eine elastische Verformung ermöglicht. Die Blockierkontur 7 wird dann erst während der Auszugsbewegung des Sicherheitsgurtes nach unten in Richtung des ersten Blockierhebels 3 verschwenkt und verdrängt dadurch den ECL-Blockierhebel 4 aufgrund der Stufe bzw. des Versatzes. Der ECL-Blockierhebel 4 wird dadurch praktisch elastisch vorgespannt. Diese elastische Vorspannung wird dann während der Schwenkbewegung des ECL-Blockierhebels 4 zu der selbsttätigen Blockierbewegung des ECL-Blockierhebels 4.

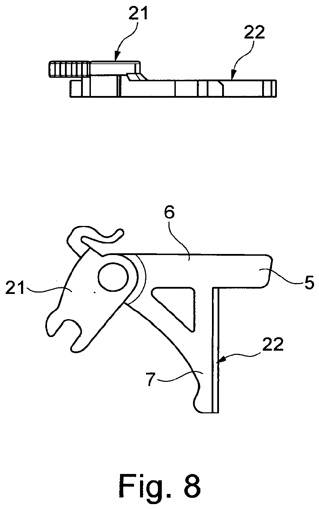

In der Figur 8 ist der LC-Blockierhebel 5 in einer vergrößerten Darstellung in zwei unterschiedlichen Perspektiven zu erkennen. Der LC-Blockierhebel 5 weist an dem als Blockierkontur 7 wirkenden Finger seitlich eine Phase 22 auf, welche die Relativbewegung zu dem ECL-Blockierhebel 4 vereinfacht, indem sie ein Abgleiten des LC-Blockierhebels 5 mit der Blockierkontur 7 an dem ECL-Blockierhebel 4 ermöglicht.

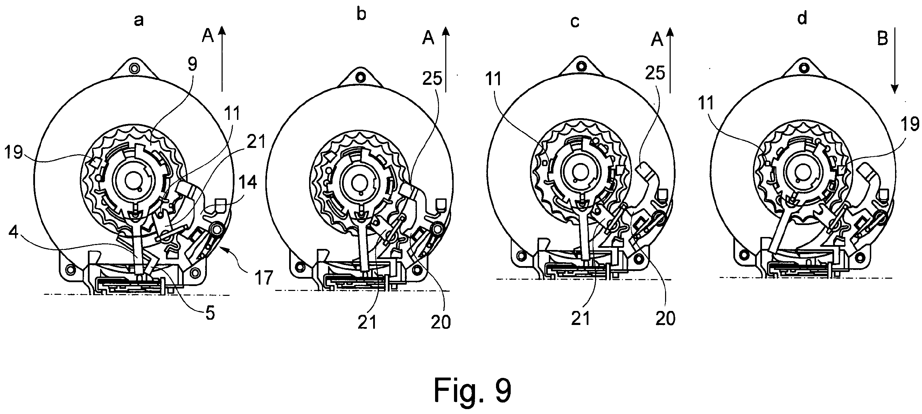

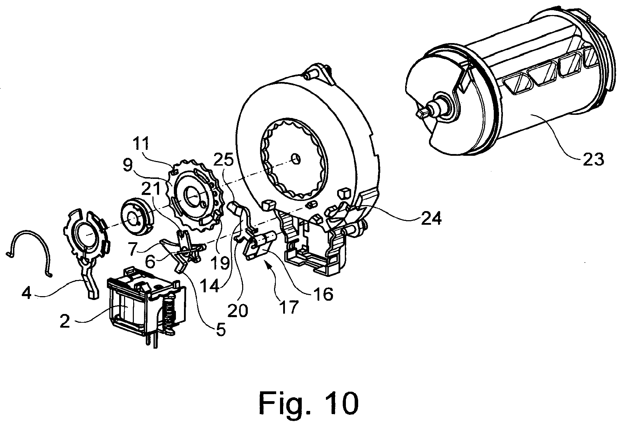

In den Figuren 9 und 10 ist ein Sicherheitsgurtaufroller nach einem zweiten Ausführungsbeispiel der Erfindung zu erkennen. Der ECL-Blockierhebel 4 ist hier ebenfalls als Reibungsschlepphebel, welcher über einen Ringfeder auf einem offenen Absatz der Gurtwelle 23 fixiert ist und dadurch die Bewegungen der Gurtwelle 23 reibungsbedingt bis zu dem Überschreiten der Reibungskraft mit ausführt.

Das Ausführungsbeispiel der Figuren 9 und 10 unterscheidet sich in der Formgebung des LC-Blockierhebels 5 und der ALR/ELR Umschaltmechanik 17. Der LC-Blockierhebel 5 ist hier ebenfalls durch eine verschwenkbare Trägerplatte 6 mit einer Blockierkontur 7 in Form eines seitlich vorstehenden Armes gebildet. Die Bewegung des LC-Blockierhebels 5 wird ebenfalls über eine zu einer Drehbewegung angetriebenen Ringverzahnung 9 mit einem daran vorgesehenen Schaltnocken 11 gesteuert. Die ALR/ELR Umschaltmechanik 17 umfasst ebenfalls eine Schaltwippe 14 mit einem vorstehenden Arm 25, welche mit dem ALR-Blockierhebel 16 zusammenwirkt, der auf einem Stift 24 verschwenkbar gelagert ist. Die Bewegung der Schaltwippe 14 zur Umschaltung aus dem ELR-Betrieb in den ALR-Betrieb, die Stellung ist in den Darstellungen c und d der Figur 9 zu erkennen, wird durch das Abgleiten des Steuernockens 19 an dem vorstehenden Arm 15 der Schaltwippe 14 gesteuert. Durch diese Bewegung gelangt die Schaltwippe 14 mit dem ALR-Blockierhebel 16 zum Eingriff in die Verzahnung der Steuerscheibe 1 und mit dem Schalthebel 20 zur Anlage an einem Fortsatz des Schalthebels 21 des LC-Blockierhebels 5. Wird das Gurtband anschließend ausgehend von dieser Stellung wieder eingezogen, bis der Schaltnocken 11 den Blockierhebel 21 passiert, so zwingt der Schaltnocken 11 den Blockierhebel 21 zu einer Schwenkbewegung aus der Stellung der Darstellung d in die Stellung der Darstellung a. Da der Blockierhebel 21 gleichzeitig über den Fortsatz an der Schaltwippe 14 anliegt, wird dabei auch die Schaltwippe 15 und darüber auch der ALR-Blockierhebel 16 zu einer Schwenkbewegung gezwungen, durch welche der ALR-Blockierhebel 16 außer Eingriff der Verzahnung der Steuerscheibe 1 gelangt. Der Gurtaufroller wird dadurch aus dem ALR-Betrieb in den ELR-Betrieb umgeschaltet.

## Patentansprüche

1. Sicherheitsgurtaufroller mit
- einer in einem Rahmen drehbar gelagerten Gurtwelle (23), auf der ein Sicherheitsgurt aufwickelbar ist, und
- einer Blockiereinrichtung zur Blockierung der Gurtwelle (23) in Auszugsrichtung des Sicherheitsgurtes, und
- einer Steuereinrichtung mit einer Steuerscheibe (1) mit einer Verzahnung zur Ansteuerung der Blockiereinrichtung, und
- einem elektrischen Aktuator (2) mit einem in Eingriffsrichtung in die Verzahnung der Steuerscheibe (1) federbelasteten ersten Blockierhebel (3), und
- einem ECL-Blockierhebel (4), welcher in einer ersten Stellung den ersten Blockierhebel (3) des Aktuators (2) während eines ersten Gurtbandauszuges in einer Stellung blockiert, in der dieser nicht in die Verzahnung der Steuerscheibe (1) eingreift, und
- einem LC-Blockierhebel (5), der in einer ersten Stellung den ersten Blockierhebel (3) des Aktuators (2) beim Unterschreiten einer vorbestimmten Gurtbandauszugslänge in einer ersten Stellung blockiert, in der dieser nicht in die Verzahnung der Steuerscheibe (1) eingreift und beim Überschreiten der vorbestimmten Gurtbandauszugslänge mittels einer Schalteinrichtung (8) in eine zweite Stellung bewegt wird, in der dieser den ersten Blockierhebel (3) nicht blockiert,
**dadurch gekennzeichnet, dass**
- der LC-Blockierhebel (5) und/oder eine Trägerplatte (6) des LC-Blockierhebels (5) eine Blockierkontur (7) aufweisen, welche derart geformt ist, dass der ECL-Blockierhebel (4) daran in einer zweiten, den ersten Blockierhebel (3) freigebenden Stellung zur Anlage gelangt, wenn der LC-Blockierhebel (5) in der zweiten Stellung angeordnet ist.

2. Sicherheitsgurtaufroller nach Anspruch 1, **dadurch gekennzeichnet, dass**
- die Schalteinrichtung (8) in Form eines mit der Gurtwelle (23) gekoppelten Zählgetriebes verwirklicht ist, welches die Bewegung des LC-Blockierhebels (5) in Abhängigkeit von der Gurtbandauszugslänge steuert.

3. Sicherheitsgurtaufroller nach Anspruch 2, **dadurch gekennzeichnet, dass**
- das Zählgetriebe eine von der Gurtwelle (23) angetriebene Ringverzahnung (9) umfasst, welche exzentrisch zu einer ringförmigen Gegenverzahnung (10) angeordnet ist und sich während der Drehung der Gurtwelle (23) an der Gegenverzahnung (10) umlaufend abwälzt und dadurch die Gegenverzahnung (10) zu einer untersetzten Drehbewegung antreibt.

4. Sicherheitsgurtaufroller nach Anspruch 3, **dadurch gekennzeichnet, dass**
- an der Gegenverzahnung (10) wenigstens ein Schaltnocken (11) vorgesehen ist, welcher die Bewegung des LC-Blockierhebels (5) steuert.

5. Sicherheitsgurtaufroller nach Anspruch 2, **dadurch gekennzeichnet, dass**
- das Zählgetriebe ein treibendes Antriebszahnrad (12) und wenigstens ein mit dem treibenden Antriebszahnrad (12) kämmendes getriebenes Abtriebszahnrad (13) aufweist, wobei
- das getriebene Abtriebszahnrad (13) auf einer schwenkbaren Schaltwippe (14) mit einer Schaltkontur (15) angeordnet ist, und
- das Antriebszahnrad (12) und/oder das Abtriebszahnrad (13) wenigstens einen Schaltnocken (16) aufweisen, welche(r) in einer vorbestimmten Drehwinkelstellung des Antriebszahnrades (12) und des Abtriebszahnrades (13) eine Schaltbewegung der Schaltwippe (14) erzwingen bzw. erzwingt und dadurch die Bewegung des LC-Blockierhebels (5) steuern bzw. steuert.

6. Sicherheitsgurtaufroller nach einem der Ansprüche 2 bis 5, **dadurch gekennzeichnet, dass**
- eine ALR/ELR-Umschaltmechanik (17) vorgesehen ist, welche durch das Zählgetriebe in Abhängigkeit von der Gurtbandauszugslänge gesteuert wird.

## Claims

1. Seat belt retractor comprising
- a belt shaft (23) which is mounted so as to be rotatable in a frame, on which belt shaft a seat belt can be taken up, and
- a blocking device for blocking the belt shaft (23) in the extension direction of the seat belt, and
- a control device having a control disk (1) with a toothing for activating the blocking device, and
- an electric actuator (2) having a first blocking lever (3) spring-loaded in the engagement direction into the toothing of the control disk (1), and
- an ECL blocking lever (4) which, in a first position, blocks the first blocking lever (3) of the actuator (2) during a first belt strap extension in a position in which this does not engage in the toothing of the control disk (1), and
- an LC blocking lever (5) which, in a first position, blocks the first blocking lever (3) of the actuator (2) in a first position if the belt strap extension length falls short of a predetermined length, in which first position it does not engage in the toothing of the control disk (1) and, upon exceeding the predetermined belt strap extension length, is moved by means of a switching device (8) into a second position in which it does not block the first blocking lever (3),
**characterized in that**
- the LC blocking lever (5) and/or a carrier plate (6) of the LC blocking lever (5) have a blocking contour (7) which is shaped in such a way that the ECL blocking lever (4) comes to rest thereon in a second position releasing the first blocking lever (3) if the LC blocking lever (5) is arranged in the second position.

2. Seat belt retractor according to Claim 1, **characterized in that**
- the switching device (8) is realized in the form of a counting gear which is coupled to the belt shaft (23) and which controls the movement of the LC blocking lever (5) depending on the belt strap extension length.

3. Seat belt retractor according to Claim 2, **characterized in that**
- the counting gear comprises an annular toothing (9) driven by the belt shaft (23), which annular toothing is arranged eccentrically to an annular counter-toothing (10) and meshes circumferentially on the counter-toothing (10) during the rotation of the belt shaft (23) and thereby drives the counter-toothing (10) to a reduced rotational movement.

4. Seat belt retractor according to Claim 3, **characterized in that**
- at least one trip cam (11), which controls the movement of the LC blocking lever (5), is provided on the counter-toothing (10).

5. Seat belt retractor according to Claim 2, **characterized in that**
- the counting gear has a driving drive gear (12) and at least one driven gear (13) meshing with the driving drive gear (12), wherein
- the driven gear (13) is arranged on a pivotable rocker (14) with a switching contour (15), and
- the drive gear (12) and/or the driven gear (13) have at least one trip cam (16) which, in a predetermined rotational angle position of the drive gear (12) and of the driven gear (13), force/forces a switching movement of the rocker (14) and thereby control/controls the movement of the LC blocking lever (5).

6. Seat belt retractor according to any one of Claims 2 to 5, **characterized in that**
- an ALR/ELR switching mechanism (17) is provided which is controlled by the counting gear as a function of the belt strap extension length.

## Revendications

1. Enrouleur de ceinture de sécurité comprenant
- un arbre de ceinture (23) monté de manière à pouvoir tourner dans un châssis, sur lequel une ceinture de sécurité peut être enroulée, et
- un dispositif de blocage servant à bloquer l'arbre de ceinture (23) dans la direction d'extraction de la ceinture de sécurité, et
- un dispositif de commande comprenant un disque de commande (1) comprenant une denture pour la commande du dispositif de blocage, et
- un actionneur (2) électrique comprenant un premier levier de blocage (3) sollicité par ressort dans la direction d'engagement dans la denture du disque de commande (1), et
- un levier de blocage ECL (4), lequel, dans une première position, bloque le premier levier de blocage (3) de l'actionneur (2) pendant une première extraction de sangle de ceinture dans une position dans laquelle celui-ci ne peut pas engager la denture du disque de commande (1), et
- un levier de blocage LC (5), lequel, dans une première position, bloque, lors d'un dépassement par le bas d'une longueur d'extraction de sangle de ceinture prédéfinie, le premier levier de blocage (3) de l'actionneur (2) dans une première position dans laquelle celui-ci n'engage pas la denture du disque de commande (1) et est déplacé, lors du dépassement par le haut de la longueur d'extraction de sangle de ceinture prédéfinie, au moyen d'un dispositif de commutation (8) dans une deuxième position dans laquelle celui-ci ne bloque pas le premier levier de blocage (3),
**caractérisé en ce que**
- le levier de blocage LC (5) et/ou une plaque de support (6) du levier de blocage LC (5) présentent un contour de blocage (7), lequel est formé de telle façon que le levier de blocage ECL (4) y vient en appui dans une deuxième position libérant le premier levier de blocage (3) lorsque le levier de blocage LC (5) est disposé dans la deuxième position.

2. Enrouleur de ceinture de sécurité selon la revendication 1, **caractérisé en ce que**
- le dispositif de commutation (8) est réalisé sous la forme d'un engrenage de comptage couplé à l'arbre de ceinture (23), lequel commande le mouvement du levier de blocage LC (5) en fonction de la longueur d'extraction de sangle de ceinture.

3. Enrouleur de ceinture de sécurité selon la revendication 2, **caractérisé en ce que**
- l'engrenage de comptage comprend une denture annulaire (9) entraînée par l'arbre de ceinture (23), laquelle est disposée de manière excentrique autour d'une contre-denture (10) annulaire et qui, pendant la rotation de l'arbre de ceinture (23), s'engage en rotation dans la contre-denture (10) et entraîne ainsi la contre-denture (10) dans un mouvement de rotation réduit.

4. Enrouleur de ceinture de sécurité selon la revendication 3, **caractérisé en ce que**
- au moins une came de commutation (11) est prévue sur la contre-denture (10), laquelle commande le mouvement du levier de blocage LC (5).

5. Enrouleur de ceinture de sécurité selon la revendication 2, **caractérisé en ce que**
- l'engrenage de comptage présente une roue dentée d'entraînement (12) motrice et au moins une roue dentée menante (13) entraînée engrenant la roue dentée d'entraînement (12) motrice,
- la roue dentée menante (13) entraînée étant disposée sur une bascule de commutation (14) pivotante comprenant un contour de commutation (15), et
- la roue dentée d'entraînement (12) et/ou la roue dentée menante (13) présentant au moins une came de commutation (16), laquelle/lesquelles force/forcent, dans une position angulaire de rotation prédéfinie de la roue dentée d'entraînement (12) et de la roue dentée menante (13), un mouvement de commutation de la bascule de commutation (14) et commande/commandent ainsi le mouvement du levier de blocage LC (5).

6. Enrouleur de ceinture de sécurité selon l'une quelconque des revendications 2 à 5, **caractérisé en ce que**
- un mécanisme de commutation ALR/ELR (17) est prévu, lequel est commandé par l'engrenage de comptage en fonction de la longueur d'extraction de la sangle de ceinture.
